# EUROPEAN PATENT SPECIFICATION

(11) **EP 4 024 371 B1**
(45) Date of publication and mention of the grant of the patent: **02.12.2026**
(21) Application number: 21216751.4
(22) Date of filing: 22.12.2021
(51) Int. Cl.: G08G 5/00, B64D 43/00, G06Q 10/06

(54) **SYSTEMS AND METHODS FOR PRESENTING AN RTA WAYPOINT WITH ASSOCIATED TIME CONSTRAINTS**
SYSTEME UND VERFAHREN ZUR DARSTELLUNG EINES RTA-WARTEPUNKTS MIT ZUGEHÖRIGEN ZEITBESCHRÄNKUNGEN
SYSTÈMES ET PROCÉDÉS DE PRÉSENTATION D'UN POINT DE CHEMINEMENT RTA AVEC DES CONTRAINTES DE TEMPS ASSOCIÉES

(30) Priority: 31.12.2020 IN 202011057525; 19.03.2021 US 202117207010
(43) Date of publication of application: 06.07.2022
(73) Proprietor: Honeywell International Inc., Charlotte, NC 28202 (US)
(72) Inventor: SAMUTHIRAPANDIAN, Subash, Charlotte, 28202 (US); FEYEREISEN, Thea, Charlotte, 28202 (US)
(74) Representative: Ingrassia, Fisher & Lorenz UK Ltd.

(56) References cited:
- US-A1- 2013 060 466
- US-A1- 2013 317 739
- US-B1- 8 099 201

## Description

### CROSS REFERENCE TO RELATED APPLICATION

This application claims priority to Indian Provisional Patent Application No. 202011057525 filed December 31, 2020.

### TECHNICAL FIELD

The present disclosure relates generally to the presentation of waypoints on flight display systems on an aircraft. More particularly, embodiments of the present disclosure provide systems and methods for presenting a waypoint in a manner that visually communicates associated required time of arrival (RTA) time constraint information.

### BACKGROUND

Air traffic control (ATC) procedures direct individual aircraft to separate from each other to maintain safety. Available flight control methods utilize aircraft current positions for separating aircraft. Using aircraft current positions to achieve required separations imposes a high workload for air traffic controllers in the terminal area. In addition, using aircraft current positions to achieve required separations can result in many landing runways not being utilized to their capacity, especially in busiest airports. Therefore, achieving required aircraft separations while also optimizing runway landing capacities at an airport is a technical problem.

Some solutions to this technical problem include utilizing aircraft trajectories, in addition to the aircraft current position (spatially). Other solutions to this technical problem utilize aircraft trajectories, the aircraft current position (spatially), and add the aircraft current position (temporally); the solution that adds the temporal, or time, element, transitions the corresponding aircraft control procedures from three dimensions (3D) to four dimensions (4D). Aircraft following 4D trajectories will reduce air traffic controller workload, increase the capacity /throughput of runway surfaces, reduce time and distance flown, reduce fuel burn by increasing predictability of arrival times at 3D waypoints. A typical 4D flight plan clearance from air traffic controller includes both a position clearance (lat/long/alt) and time clearance. Time clearance is provided as Required Time of Arrival (RTA) to a specified waypoint in flight plan at a specified time.

Current RTA usage is generally limited to a single RTA constraint in a cruise phase of flight. However, as next generation procedures evolve, it is anticipated that RTAs will be become more common and proliferate through other phases of flight, including descent and taxi operations (although no altitude constraint, a waypoint with time). Descent profiles typically provide higher workload to the pilot due to frequency of both lateral track constraints and vertical constraints.

Document US/2013317739A1 discloses a system for an aircraft to receive and process RTA way point information. A schematic display shows, for each way point a horizontal timeline with the minimum/maximum achievable arrival bounds, the predicted ETA, and the time-constraint type indicated by triangular arrows .

The document US2013060466A1 discloses the representation of RTA waypoints on a lateral and a vertical avionics display with the aircraft symbol and **flight-plan** trajectory; a virtual bug is placed onto the trajectory and a graphical indication of compliance as well as a textual alert is displayed when the aircraft is late.

Document US 8099201 B1 discloses a **vertical-profile** display with a horizontal **time-axis** overlaid on the altitude axis. Adjacent to the way point label a rectangular **RTA-window** is drawn, indicating the permissible arrival time window. The window is annotated with the earliest and latest times, providing a visual cue of compliance without any textual alert.

Accordingly, technologically enhanced systems and methods that allow pilots to quickly recognize that a waypoint that has an RTA constraint are desired. The present disclosure provides a technical solution in the form of waypoint symbology that visually communicates that a waypoint has an RTA constraint. Other desirable features and characteristics of the present invention will become apparent from the subsequent detailed description of the invention and the appended claims, taken in conjunction with the accompanying drawings and this background of the invention.

### BRIEF SUMMARY

The present invention relates to a system and a method as defined by the claims.

### BRIEF DESCRIPTION OF THE DRAWINGS

At least one example of the present invention will hereinafter be described in conjunction with the following figures, wherein like numerals denote like elements, and wherein:
FIG. 1 is a block diagram of a system for presenting an RTA waypoint with associated time constraints, in accordance with an exemplary embodiment .
FIGS. 2-4 are simplified illustrations introducing features of an avionic display generated by a for presenting an RTA waypoint with associated time constraints, in accordance with an exemplary embodiments; and
FIG. 5 is an exemplary flow diagram illustrating a method for presenting an RTA waypoint with associated time constraints.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As used herein, the term "present" refers broadly to any means or method for the distribution of information to a flight crew or other aircraft operator, whether visually, aurally, tactilely, or otherwise.

As mentioned, assuring the separation of individual aircraft to maintain safety, as required by regulating authorities and Air traffic control (ATC) procedures, is a technical problem that can even affect taxi operations (although a taxi operation has no altitude constraint, it can be considered a waypoint with time). Some solutions to this technical problem utilize 4D aircraft trajectories: the aircraft current position (spatially), and the aircraft current position (temporally). A typical 4D flight plan clearance from air traffic controller includes both a position clearance (lat/long/alt) and time clearance. Time clearance is provided as Required Time of Arrival (RTA) to a specified waypoint in flight plan at a specified time.

As next generation procedures evolve, it is anticipated that RTAs will be become more common and proliferate beyond the cruise phase of flight through other phases of flight, including descent. Because descent profiles typically provide a higher workload to the pilot (due to frequency of both lateral track constraints and vertical constraints), providing RTA waypoint guidance to a pilot is a challenging technical problem. This technical problem manifests as a deficiency in a human-machine interface (HMI), because with many available flight guidance systems, it can be very difficult for a pilot to see a big picture of the descent situation.

Provided embodiments provide a technical solution in the form of a system that provides an intuitive visualization on an avionic display of the RTA waypoint with its associated time constraint. With these features, the present disclosure provides an objectively improved HMI over available flight guidance systems.

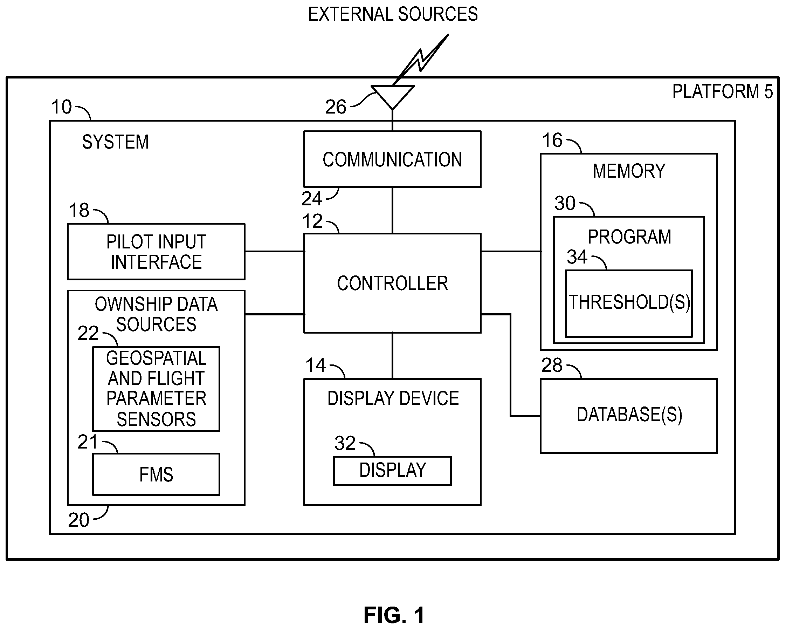

FIG. 1 is a block diagram of a system **10** for presenting an RTA waypoint with associated time constraints (shortened herein to "system" **10),** as illustrated in accordance with an exemplary and non-limiting embodiment of the present disclosure. The system **10** may be utilized onboard a mobile platform **5** to provide visual guidance, as described herein. In various embodiments, the mobile platform is an aircraft **5,** which carries or is equipped with the system **10.** As schematically depicted in FIG. 1, the system **10** includes the following components or subsystems, each of which may assume the form of a single device or multiple interconnected devices: a controller circuit **12** operationally coupled to: at least one display device **14;** computer-readable storage media or memory **16;** an optional input interface **18,** and ownship data sources **20** including, for example, a flight management system (FMS) **21** and an array of flight system status and geospatial sensors **22.**

In various embodiments, the system **10** may be separate from or integrated within: the flight management system (FMS) and/or a flight control system (FCS). Although schematically illustrated in FIG. 1 as a single unit, the individual elements and components of the system **10** can be implemented in a distributed manner utilizing any practical number of physically distinct and operatively interconnected pieces of hardware or equipment. When the system **10** is utilized as described herein, the various components of the system **10** will typically all be located onboard the Aircraft **5.**

The term "controller circuit" (and its simplification, "controller"), broadly encompasses those components utilized to carry-out or otherwise support the processing functionalities of the system **10.** Accordingly, controller circuit **12** can encompass or may be associated with a programmable logic array, application specific integrated circuit or other similar firmware, as well as any number of individual processors, flight control computers, navigational equipment pieces, computer-readable memories (including or in addition to memory **16),** power supplies, storage devices, interface cards, and other standardized components. In various embodiments, controller circuit **12** embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit **12** may be programmed with and execute the at least one firmware or software program, for example, program **30,** that embodies an algorithm described herein for receiving and processing RTA waypoint information to thereby present a visualization of an RTA waypoint with associated time constraints on an avionic display for an aircraft **5,** and to accordingly perform the various process steps, tasks, calculations, and control/display functions described herein.

Controller circuit **12** may exchange data, including real-time wireless data, with one or more external sources **50** (for example, Air Traffic Control) to support operation of the system **10** in embodiments. In various embodiments, the controller **12** may receive and process required time of arrival (RTA) waypoint information for the aircraft **5.** In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

Memory **16** is a data storage that can encompass any number and type of storage media suitable for storing computer-readable code or instructions, such as the aforementioned software program **30,** as well as other data generally supporting the operation of the system **10.** Memory **16** may also store one or more threshold **34** values, for use by an algorithm embodied in software program **30.** Examples of threshold **34** values include margins of error for altitude deviations, airspeed deviations, and lateral deviations. One or more database(s) **28** are another form of storage media; they may be integrated with memory **16** or separate from it.

In various embodiments, aircraft-specific parameters and information for aircraft **5** may be stored in the memory **16** or in a database **28** and referenced by the program **30.** Non-limiting examples of aircraft-specific information includes an aircraft weight and dimensions, performance capabilities, configuration options, and the like.

In various embodiments, two- or three-dimensional map data may be stored in a database **28,** including airport features data, geographical (terrain), buildings, bridges, and other structures, street maps, and navigational databases including but not limited to waypoints and airways, which may be updated on a periodic or iterative basis to ensure data timeliness. This map data may be uploaded into the database **28** at an initialization step and then periodically updated, as directed by either a program **30** update or by an externally triggered update.

Flight parameter sensors and geospatial sensors **22** supply various types of data or measurements to controller circuit **12** during Aircraft flight. In various embodiments, the geospatial sensors **22** supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, display device **14** can include any number and type of image generating devices on which one or more avionic displays **32** may be produced. When the system **10** is utilized for a manned Aircraft, display device **14** may be affixed to the static structure of the Aircraft cockpit as, for example, a Head Down Display (HDD) or Head Up Display (HUD) unit. In various embodiments, the display device **14** may assume the form of a movable display device (e.g., a pilot-worn display device) or a portable display device, such as an Electronic Flight Bag (EFB), a laptop, or a tablet computer carried into the Aircraft cockpit by a pilot.

At least one avionic display **32** is generated on display device **14** during operation of the system **10;** the term "avionic display" is synonymous with the term "aircraft-related display" and "cockpit display" and encompasses displays generated in textual, graphical, cartographical, and other formats. The system **10** can simultaneously generate various types of lateral and vertical avionic displays **32** on which map views and symbology, text annunciations, and other graphics pertaining to flight planning are presented for a pilot to view. The display device **14** is configured to continuously render at least a lateral display showing the Aircraft **5** at its current location and trajectory within the map data. The avionic display **32** generated and controlled by the system **10** can include graphical user interface (GUI) objects and alphanumerical input displays of the type commonly presented on the screens of MCDUs, as well as Control Display Units (CDUs) generally. Specifically, embodiments of avionic displays **32** include one or more two dimensional (2D) avionic displays, such as a horizontal (i.e., lateral) navigation display or vertical navigation display (i.e., vertical situation display VSD); and/or, one or more three dimensional (3D) avionic displays, such as a Primary Flight Display (PFD) or an exocentric 3D avionic display.

In various embodiments, a human-machine interface is implemented as an integration of a pilot input interface **18** and a display device **14.** In various embodiments, the human-machine interface is embodied as a touch screen display device **14.** In various embodiments, the human-machine interface includes a touch screen display device **14** and at least one additional pilot input interface **18** (such as a keyboard, cursor control device, voice input device, or the like), generally operationally coupled to the display device **14.** Via various display and graphics systems processes, the controller circuit **12** may command and control a touch screen display device **14** to generate a variety of graphical user interface (GUI) objects or elements described herein, including, for example, buttons, sliders, and the like, which are used to prompt a user to interact with the human-machine interface to provide user input; and for the controller circuit **12** to activate respective system functions and provide user feedback, responsive to received user input at the GUI element.

In various embodiments, the system **10** may also include a dedicated communications circuit **24** configured to provide a real-time bidirectional wired and/or wireless data exchange for the controller **12** to communicate with the external sources **50** (including, each of: traffic, air traffic control (ATC), satellite weather sources, ground stations, and the like). In various embodiments, the communications circuit **24** may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit **24** is integrated within the controller circuit **12,** and in other embodiments, the communications circuit **24** is external to the controller circuit **12.** When the external source **50** is "traffic," the communications circuit **24** may incorporate software and/or hardware for communication protocols as needed for traffic collision avoidance (TCAS), automatic dependent surveillance broadcast (ADSB), and enhanced vision systems (EVS).

**In** certain embodiments of system **10,** the controller circuit **12** and the other components of the system **10** may be integrated within or cooperate with any number and type of systems commonly deployed onboard an aircraft including, for example, the FMS **21.** The system **10** includes a source of an assigned flight plan comprising a plurality of waypoints. In various embodiments, the FMS **21** is the source of the assigned flight plan and waypoints.

The disclosed algorithm is embodied in a hardware program or software program (e.g. program **30** in controller circuit **12)** and configured to operate when the aircraft **5** is in any phase of flight. The algorithm presents RTA waypoint time constraint information to the pilot and crew via at least the avionic display **32.**

In various embodiments, the provided controller circuit **12,** and therefore its program **30** may incorporate the programming instructions necessary for: (a) receiving and processing aircraft status data and RTA waypoint information, determining a time constraint for a RTA waypoint, commanding the display device **14** to render the navigation display and the VSD on the avionic display **32,** and rendering the RTA waypoint using a visual encoding scheme; and (b) maintaining the human-machine interface (HMI), including any associated graphical user interface (GUI) presented on the display device **14.**

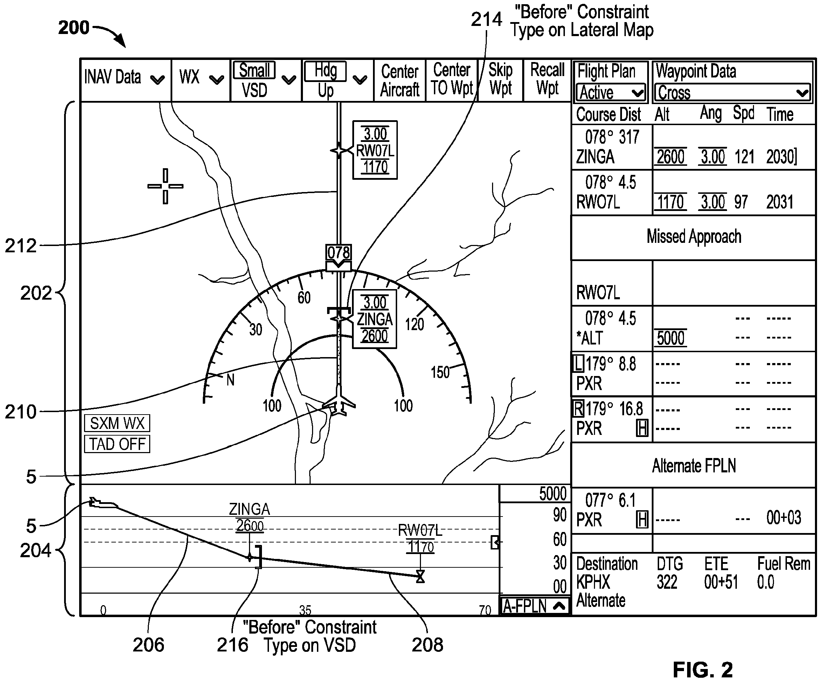

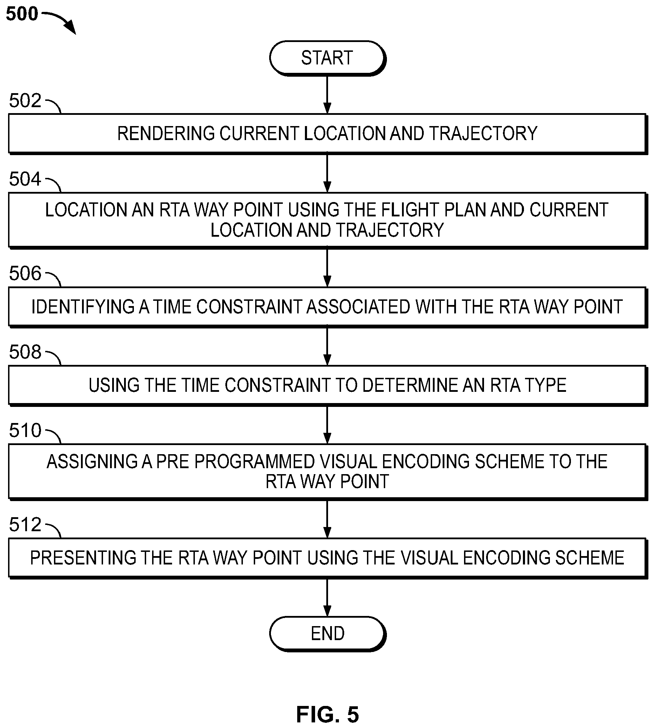

Turning now to FIGS. 2-5, the operation of various embodiments is described. FIGS. 2-4 provide simplified illustrations to introduce features of a presentation of an RTA waypoint with associated time constraints, and FIG. 5 provides an example method for presenting an RTA waypoint with associated time constraints.

During operation, the controller circuit **12,** which is programmed by programming instructions to receive and process aircraft status data and RTA waypoint information, commands the display device **14** to render a symbol for the aircraft **5** at its current location and current trajectory in a lateral display and in a vertical display. Avionic display **200** includes a horizontal or navigation display (INAV) **202** and a vertical situation display (VSD) **204.** Aircraft **5** is shown on a trajectory **206** and **208** on the VSD **204** and on trajectory **210** and **212** on the navigation display **202.** Avionic display **300** includes a horizontal or navigation display (INAV) **302** and a vertical situation display (VSD) **304.** Aircraft **5** is shown on a trajectory **306** and **308** on the VSD **304** and on trajectory **310** and **312** on the navigation display **302.** Avionic display **400** includes a horizontal or navigation display (INAV) **402** and a vertical situation display (VSD) **404.** Aircraft **5** is shown on a trajectory **406** and **408** on the VSD **404** and trajectory **410** and **412** on the navigation display **402.**

The controller **12** locates an RTA waypoint that is ahead of the aircraft **5** on its current trajectory, from among the plurality of waypoints making up the flight plan of the aircraft **5.** In the example of FIGS. 2-4, the controller **12** located the RTA waypoint ZINGA at altitude 2600, as a function of (e.g., by comparing) the flight plan and the current location and trajectory of the aircraft.

The controller **12** additionally identifies a time constraint associated with the RTA waypoint. In various embodiments, an Air Traffic Controller (at ATC) can issue 3 types of RTA constraints. Using ZINGA as the example waypoint name, the three types of RTA constraints are: (1) an "AT" constraint, for eexample, "Cross ZINGA AT 11:30:45z"; (2) a "Before" constraint, for example, "Cross ZINGA BEFORE 11:30:45z"; and, (3) an "After" constraint, for example, "Cross ZINGA AFTER 11:30:45z".

Since it is known that there will be three types of RTA constraints, the system **10** includes, for each type of RTA waypoint, a distinctly different preprogrammed visual encoding scheme. Each preprogrammed visual encoding scheme includes at least one symbol (or graphical user interface (GUI) object) scaled to render next to the RTA waypoint, on the trajectory of the aircraft, without obscuring relevant background data on the respective avionic display **32.** Further, in various embodiments, the symbol may be open on a side facing a waypoint. To put this into context, left-to-right nomenclature can be used. For example, viewing either the navigation display or the vertical situation display, rotate the image until the aircraft **5** is on the left, and the aircraft trajectory ahead of the aircraft is from left to right, with the RTA waypoint therein, The preprogrammed visual encoding scheme places a symbol on the left or on the right of the RTA waypoint, on the trajectory of the aircraft.

The controller **12** uses the time constraint associated with the RTA waypoint to determine a type for the RTA waypoint, from among an "at", a "before", and an "after", as described above. The controller **12** may then reference the preprogrammed visual encoding schemes to assign one of the visual encoding schemes for the type to the RTA waypoint.

The controller **12** then presents the RTA waypoint, using the visual encoding scheme, on the display device **14.**

In accordance with the invention, such as is shown in FIGS. 2-4, brackets are used as the symbols or GUI objects, as follows: for an "after" type, a bracket that is open to a right side, placed on a left side of the waypoint; for a "before" type, a bracket that is open to a left side, placed on a right side of the waypoint; and for an "at" type, enclosing the waypoint with a bracket on each side of the waypoint.

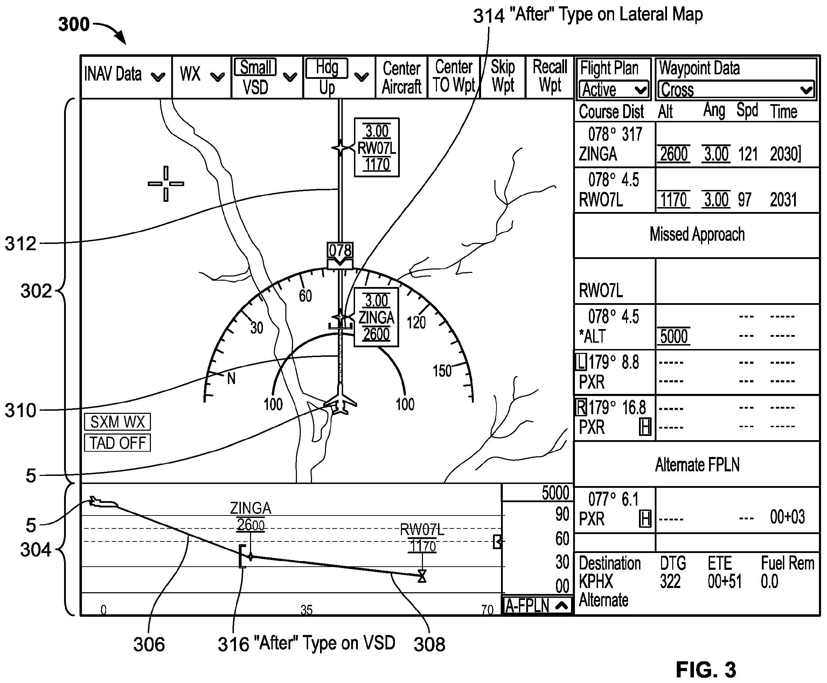

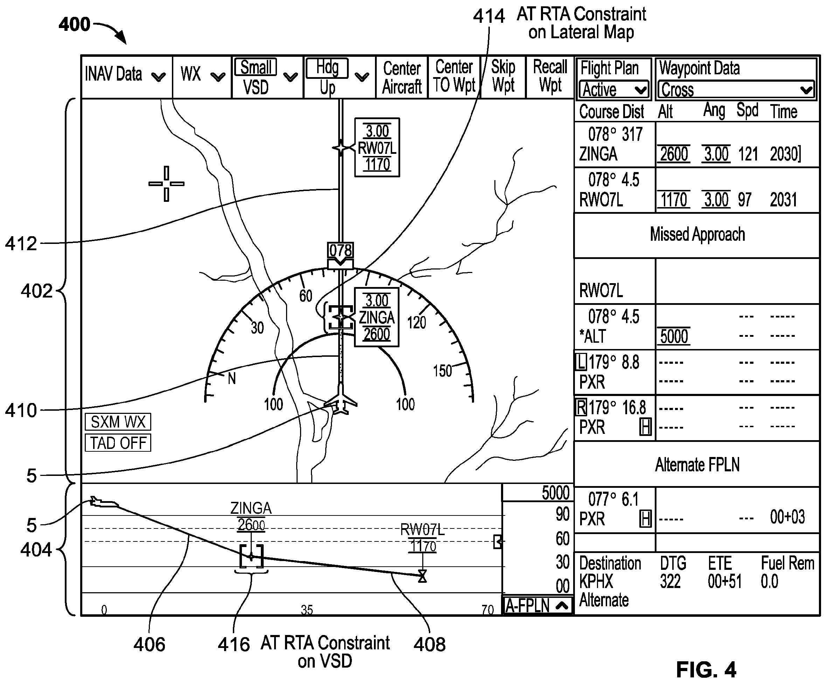

In FIG. 2, the RTA waypoint ZINGA is a "Before" type and the avionic display **200** depicts a bracket **214** placed on the trajectory **212** after the RTA waypoint, open toward the waypoint in the navigation display **202,** and bracket **216** placed on trajectory **208** after the RTA waypoint, open left (i.e., toward the waypoint ZINGA) on the VSD **204.** In FIG. 3, the RTA waypoint ZINGA is an "After" type and the avionic display **300** depicts a bracket **314** placed on the trajectory **310** before the RTA waypoint, open toward the waypoint in the navigation display **302,** and bracket **316** placed on trajectory **306** before the RTA waypoint, open right (i.e., toward the waypoint ZINGA) on the VSD **204.** In FIG. 4, the RTA waypoint ZINGA is an "At" type and the avionic display **400** depicts the waypoint ZINGA at least partially enclosed by two symbols **414** (a bracket on the trajectory **410** before the waypoint and a bracket on the trajectory **412** after the RTA waypoint, each positioned to be open toward the waypoint) in the navigation display **402,** and similarly, at least partially enclosed by two symbols **416** (a bracket on the trajectory **406** before the waypoint and a bracket on the trajectory **408** after the RTA waypoint, each positioned to be open toward the waypoint) on the VSD **404.**

In other examples not claimed, carrots, parenthesis, and braces are used to employ the same open to the right, open to the left, and at least partially enclosing of the waypoint. In still other embodiments, a vertical bar can be used for the symbols or GUI objects. In the provided embodiments, the symbols are scaled to proportion with the waypoint such that background information is minimally affected or occluded.

In the above embodiments, the waypoint itself is presented as a symbol on the navigation display or the VSD. In other embodiments, the waypoint may be presented as text. In various embodiments, the waypoint is presented as text on a portion of the avionic display **32** dedicated to alphanumeric information, and the waypoint is presented using a preprogrammed visual encoding scheme, as described above. In an embodiment, the waypoint is a ground marker, used for a taxi operation; in this example, the waypoint has no altitude constraint, but has a time constraint.

As can be seen in FIGS. 2-4, the presentation (i.e., the visualization) of the RTA waypoint, using these visual encoding schemes to convey the time constraint, provides an objective improvement in the HMI, as one can immediately see where the aircraft is with respect to assumed spatial and temporal RTA waypoint targets.

Returning to FIG. 5, a flow diagram is provided illustrating a method **500** for presenting an RTA waypoint with associated time constraints, in accordance with the present disclosure. At **502,** the system **10** is determined to have been programmed with the algorithm and the preprogrammed visual encoding schemes, and the method determines and renders a current location and trajectory of the aircraft 5 in a navigation display and in a vertical display. At **504** the method locates the RTA waypoint among the plurality of waypoints making up the flight plan of the aircraft 5, as a function of the flight plan and the current location and trajectory of the aircraft. At 506, the method identifies a time constraint associated with the RTA waypoint. At **508,** the methods uses the time constraint to determine a type, from among an "at", a "before", and an "after", for the RTA waypoint. At **510,** the method assigns a preprogrammed visual encoding scheme to the RTA waypoint. At **512,** the method presents the RTA waypoint, using the visual encoding scheme, on the avionic display **32.** After **512** the method may end or may return to **502.**

As such, disclosed herein is flight display system for presenting RTA waypoints with their time constraint information, using the visual encoding scheme, on an avionic display **32.** The system **10** improves upon available algorithms by presenting the RTA waypoint in a way that integrates therewith the flight constraint information. Additionally, the system **10** can improve the safety of taxi operations (as mentioned, although a taxi operation has no altitude constraint, it can be considered a waypoint with time). Thus, the system **10** provides an objectively improved human-machine interface (HMI).

While the present disclosure has provided exemplary embodiments directed to a flight display system, it will be appreciated that the embodiments presented herein can be extended to other applications where approach assistance may be desirable, and where approaches may be improved through the use of a display. For example, other suitable applications may include maritime applications, railroad applications, industrial/manufacturing plant applications, space travel applications, simulator applications, and others as will be appreciated by those having ordinary skill in the art.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It is being understood that various changes may be made in the function and arrangement of elements described in an exemplary embodiment without departing from the scope of the invention as set forth in the appended claims.

## Claims

1. A system (10) for an aircraft to receive and process required time of arrival, RTA, waypoint information to present an RTA waypoint with associated time constraints, the system comprising:
a flight management system, FMS, (21) configured to provide an assigned flight plan with a plurality of waypoints;
a display device (14) configured to render a current location and trajectory of the aircraft in a lateral map navigation display (202) and in a vertical display (204); and
a controller circuit (12) in operable communication with the FMS and the display device, the controller circuit configured by programming instructions to:
locate the RTA waypoint among the plurality of waypoints, as a function of the flight plan and the current location and trajectory of the aircraft;
identify a time constraint associated with the RTA waypoint;
use the time constraint to determine a type, from among an "at", a "before", and an "after", for the RTA waypoint;
assign a preprogrammed visual encoding scheme for the type to the RTA waypoint, the preprogrammed visual encoding scheme including at least one symbol scaled to render next to the RTA waypoint, on the trajectory of the aircraft; and
present the RTA waypoint, using the visual encoding scheme, on the lateral map navigation display and the vertical display on the display device, wherein
the preprogrammed visual encoding scheme includes:
for an "after" type, a bracket (316) arranged on the trajectory before the waypoint and open towards the waypoint;
for a "before" type, a bracket (216) arranged on the trajectory after and open towards the waypoint; and
for an "at" type, enclosing the waypoint with a bracket (416) on each side of the waypoint, before and after the waypoint with each bracket (416) open towards the waypoint.

2. The system of claim 1, wherein the controller circuit is further configured to:
present the waypoint as a symbol, using the visual encoding scheme, on the display device.

3. The system of claim 1, wherein the controller circuit is further configured to:
present the waypoint as text, using the visual encoding scheme, on the display device.

4. A method for presenting an required time of arrival, RTA, waypoint with associated time constraints on an avionic display (14) of an aircraft, the method comprising:
rendering a current location and trajectory of the aircraft in a lateral map navigation display and in a vertical display on the avionic display;
locating the RTA waypoint among a plurality of waypoints comprising a flight plan of the aircraft, and as a function of the current location and trajectory of the aircraft;
identifying a time constraint associated with the RTA waypoint;
using the time constraint to determine a type, from among an "at", a "before", and an "after", for the RTA waypoint;
assigning a preprogrammed visual encoding scheme for the type to the RTA waypoint, the preprogrammed visual encoding scheme including at least one symbol scaled to render next to the RTA waypoint, on the trajectory of the aircraft; and
presenting the RTA waypoint, using the visual encoding scheme, on the lateral map navigation display and the vertical display on the display device, wherein
the preprogrammed visual encoding scheme includes:
for an "after" type, a bracket that is arranged on the trajectory before the waypoint and open towards the waypoint;
for a "before" type, a bracket that is arranged on the trajectory after and open towards the waypoint; and
for an "at" type, enclosing the waypoint with a bracket on each side of the waypoint, before and after the waypoint with each bracket (416) open towards the waypoint.

5. The method of claim 4, further comprising, presenting the waypoint as a symbol, using the visual encoding scheme, on the display device.

6. The method of claim 4, further comprising, presenting the waypoint as text, using the visual encoding scheme, on the display device.

## Patentansprüche

1. System (10) für ein Flugzeug, um Informationen über einen Erforderliche-Ankunftszeit, RTA,-Wegpunkt zu empfangen und zu verarbeiten, um einen RTA-Wegpunkt mit zugehörigen Zeitvorgaben darzustellen, das System umfassend:
ein Flugmanagementsystem, FMS, (21), das dazu konfiguriert ist, einen zugewiesenen Flugplan mit einer Vielzahl von Wegpunkten bereitzustellen;
eine Anzeigevorrichtung (14), die dazu konfiguriert ist, einen aktuellen Ort und eine aktuelle Flugbahn des Flugzeugs in einer lateralen Kartennavigationsanzeige (202) und in einer vertikalen Anzeige (204) wiederzugeben; und
eine Steuerschaltung (12) in betriebsfähiger Kommunikation mit dem FMS und der Anzeigevorrichtung, wobei die Steuerschaltung durch Programmieranweisungen dazu konfiguriert ist:
den RTA-Wegpunkt aus der Vielzahl von Wegpunkten als eine Funktion des Flugplans und des aktuellen Orts und der aktuellen Flugbahn des Flugzeugs zu lokalisieren;
eine dem RTA-Wegpunkt zugehörige Zeitvorgabe zu identifizieren;
die Zeitvorgabe zu verwenden, um einen Typ aus einem "um", einem "vor" und einem "nach" für den RTA-Wegpunkt zu bestimmen;
dem RTA-Wegpunkt ein vorprogrammiertes visuelles Kodierungsschema für den Typ zuzuweisen, wobei das vorprogrammierte visuelle Kodierungsschema mindestens ein Symbol beinhaltet, das so skaliert ist, dass es neben dem RTA-Wegpunkt auf der Flugbahn des Flugzeugs wiedergegeben wird; und
den RTA-Wegpunkt unter Verwendung des visuellen Kodierungsschemas auf der lateralen Kartennavigationsanzeige und der vertikalen Anzeige auf der Anzeigevorrichtung darzustellen, wobei
das vorprogrammierte visuelle Kodierungsschema Folgendes beinhaltet:
für einen "nach"-Typ, eine Klammer (316), die auf der Flugbahn vor dem Wegpunkt angeordnet ist und zu dem Wegpunkt hin offen ist;
für einen "vor"-Typ, eine Klammer (216), die auf der Flugbahn nach dem Wegpunkt angeordnet ist und zu dem Wegpunkt hin offen ist; und
für einen "um"-Typ, Umschließen des Wegpunkts mit der Klammer (416) auf jeder Seite des Wegpunkts vor und nach dem Wegpunkt, wobei jede Klammer (416) zu dem Wegpunkt hin offen ist.

2. System nach Anspruch 1, wobei die Steuerschaltung ferner dazu konfiguriert ist:
den Wegpunkt unter Verwendung des visuellen Kodierungsschemas als ein Symbol auf der Anzeigevorrichtung darzustellen.

3. System nach Anspruch 1, wobei die Steuerschaltung ferner dazu konfiguriert ist:
den Wegpunkt unter Verwendung des visuellen Kodierungsschemas als Text auf der Anzeigevorrichtung darzustellen.

4. Verfahren zum Darstellen eines Erforderliche-Ankunftszeit, RTA,-Wegpunkts mit zugehörigen Zeitvorgaben auf einer Avionikanzeige (14) eines Flugzeugs, das Verfahren umfassend:
Wiedergeben eines aktuellen Orts und einer aktuellen Flugbahn des Flugzeugs in einer lateralen Kartennavigationsanzeige und in einer vertikalen Anzeige auf der Avionikanzeige;
Lokalisieren des RTA-Wegpunkts aus einer Vielzahl von Wegpunkten, die einen Flugplan des Flugzeugs umfassen, und als eine Funktion des aktuellen Orts und der aktuellen Flugbahn des Flugzeugs;
Identifizieren einer dem RTA-Wegpunkt zugehörige Zeitvorgabe;
Verwenden der Zeitvorgabe, um einen Typ aus einem "um", einem "vor" und einem "nach" für den RTA-Wegpunkt zu bestimmen;
Zuweisen, zu dem RTA-Wegpunkt, eines vorprogrammierten visuellen Kodierungsschemas für den Typ, wobei das vorprogrammierte visuelle Kodierungsschema mindestens ein Symbol beinhaltet, das so skaliert ist, dass es neben dem RTA-Wegpunkt auf der Flugbahn des Flugzeugs wiedergegeben wird; und
Darstellen des RTA-Wegpunkts unter Verwendung des visuellen Kodierungsschemas auf der lateralen Kartennavigationsanzeige und der vertikalen Anzeige auf der Anzeigevorrichtung, wobei
das vorprogrammierte visuelle Kodierungsschema Folgendes beinhaltet:
für einen "nach"-Typ, eine Klammer, die auf der Flugbahn vor dem Wegpunkt angeordnet ist und zu dem Wegpunkt hin offen ist;
für einen "vor"-Typ, eine Klammer, die auf der Flugbahn nach dem Wegpunkt angeordnet ist und zu dem Wegpunkt hin offen ist; und
für einen "um"-Typ, Umschließen des Wegpunkts mit der Klammer auf jeder Seite des Wegpunkts vor und nach dem Wegpunkt, wobei jede Klammer (416) zu dem Wegpunkt hin offen ist.

5. Verfahren nach Anspruch 4, ferner umfassend Darstellen des Wegpunkts unter Verwendung des visuellen Kodierungsschemas als ein Symbol auf der Anzeigevorrichtung.

6. Verfahren nach Anspruch 4, ferner umfassend Darstellen des Wegpunkts unter Verwendung des visuellen Kodierungsschemas als Text auf der Anzeigevorrichtung.

## Revendications

1. Système (10) pour un aéronef pour recevoir et traiter des informations de point de trajet de temps d'arrivée requis, RTA, pour présenter un point de trajet RTA avec des contraintes de temps associées, le système comprenant :
un système de gestion de vol, FMS, (21) configuré pour fournir un plan de vol attribué avec une pluralité de points de trajet ;
un dispositif d'affichage (14) configuré pour rendre un emplacement et une trajectoire actuels de l'aéronef dans un affichage de navigation à carte latérale (202) et dans un affichage vertical (204) ; et
un circuit de contrôle (12) en communication fonctionnelle avec le FMS et le dispositif d'affichage, le circuit de contrôle configuré par des instructions de programmation pour :
localiser le point de trajet RTA parmi la pluralité de points de trajet, en tant que fonction du plan de vol, et de l'emplacement et de la trajectoire actuels de l'aéronef ;
identifier une contrainte de temps associée au point de trajet RTA ;
utiliser la contrainte de temps pour déterminer un type, parmi un « à », un « avant » et un « après » pour le point de trajet RTA ;
attribuer un schéma de codage visuel préprogrammé pour le type au point de trajet RTA, le schéma de codage visuel préprogrammé incluant au moins un symbole mis à l'échelle à rendre à côté du point de trajet RTA, sur la trajectoire de l'aéronef ; et
présenter le point de trajet RTA, en utilisant le schéma de codage visuel, sur l'affichage de navigation à carte latérale et l'affichage vertical sur le dispositif d'affichage, dans lequel
le schéma de codage visuel préprogrammé inclut :
pour un type « après », un crochet (316) agencé sur la trajectoire avant le point de trajet et ouvert vers le point de trajet ;
pour un type « avant », un crochet (216) agencé sur la trajectoire après le point de trajet et ouvert vers celui-ci ; et
pour un type « à », le renfermement du point de trajet avec un crochet (416) sur chaque côté du point de trajet, avant et après le point de trajet avec chaque crochet (416) ouvert vers le point de trajet.

2. Système selon la revendication 1, dans lequel le circuit de contrôle est en outre configuré pour : présenter le point de trajet en tant que symbole, en utilisant le schéma de codage visuel, sur le dispositif d'affichage.

3. Système selon la revendication 1, dans lequel le circuit de contrôle est en outre configuré pour : présenter le point de trajet en tant que texte, en utilisant le schéma de codage visuel, sur le dispositif d'affichage.

4. Procédé pour présenter un point de trajet de temps d'arrivée requis, RTA, avec des contraintes de temps associées sur un affichage avionique (14) d'un aéronef, le procédé comprenant :
le rendement d'un emplacement et d'une trajectoire actuels de l'aéronef dans un affichage de navigation à carte latérale et dans un affichage vertical sur l'affichage avionique ;
la localisation du point de trajet RTA parmi une pluralité de points de trajet comprenant un plan de vol de l'aéronef, et en tant que fonction de l'emplacement et de la trajectoire actuels de l'aéronef ;
l'identification d'une contrainte de temps associée au point de trajet RTA ;
l'utilisation de la contrainte de temps pour déterminer un type, parmi un « à », un « avant » et un « après » pour le point de trajet RTA ;
l'attribution d'un schéma de codage visuel préprogrammé pour le type au point de trajet RTA, le schéma de codage visuel préprogrammé incluant au moins un symbole mis à l'échelle à rendre à côté du point de trajet RTA, sur la trajectoire de l'aéronef ; et
la présentation du point de trajet RTA, en utilisant le schéma de codage visuel, sur l'affichage de navigation à carte latérale et l'affichage vertical sur le dispositif d'affichage, dans lequel
le schéma de codage visuel préprogrammé inclut :
pour un type « après », un crochet qui est agencé sur la trajectoire avant le point de trajet et ouvert vers le point de trajet ;
pour un type « avant », un crochet qui est agencé sur la trajectoire après le point de trajet et ouvert vers celui-ci ; et
pour un type « à », le renfermement du point de trajet avec un crochet sur chaque côté du point de trajet, avant et après le point de trajet avec chaque crochet (416) ouvert vers le point de trajet.

5. Procédé selon la revendication 4, comprenant en outre la présentation du point de trajet en tant que symbole, en utilisant le schéma de codage visuel, sur le dispositif d'affichage.

6. Procédé selon la revendication 4, comprenant en outre la présentation du point de trajet en tant que texte, en utilisant le schéma de codage visuel, sur le dispositif d'affichage.
